# EUROPEAN PATENT APPLICATION

(11) **EP 0 918 441 A2**
(43) Date of publication of application: **26.05.1999**
(21) Application number: 98119856.7
(22) Date of filing: 20.10.1998
(51) Int. Cl.: H04Q 7/08, H04Q 7/32

(54) **Paging network system**

(30) Priority: 22.10.1997 EP 97118325
(71) Applicant: DeTeMobil Deutsche Telekom MobilNet GmbH, 53227 Bonn (DE)
(72) Inventor: The designation of the inventor has not yet been filed
(74) Representative: Riebling, Peter, Dr.-Ing.

(57) **Abstract**

The present invention relates to a paging network system containing at least two independent paging networks with paging terminals, each of the paging networks containing means for storing paging terminal location information and means for treating paging information, whereby at least one linking arrangement is provided between the at least two paging networks which controls data flow between the paging networks. The linking arrangement contains means for treating location information assigned to paging terminals of at least one of the paging networks. Further a method and an arrangement for controlling data flow between independent paging networks with user terminals are provided, whereby location information of paging terminals of the paging networks is stored in the paging networks and the data flow between the data networks is controlled by a linking arrangement independent form the paging networks.

## Description

The invention relates to paging network systems, in particular to paging networks containing means for storing paging terminal location information and means for treating paging information. It is already known from the state of the art, e.g. from WO 96/35289, that paging networks can be provided with abilities to locate paging terminals and to treat and store paging terminal location information. Such kind of systems are built to work within one paging network structure and allow moving within the predetermined network area. But such systems give no solution to cases when a user of a paging network leaves the area of a paging network and enters a different paging network area. There are great problems of how to still provide reachability for paging users passing the borders of paging networks.

This problem is solved by the invention disclosed in the independent claims. One object of the invention is a paging network system containing at least two independent paging networks with paging terminals, each of the paging networks containing means for storing paging terminal location information and means for treating paging information, whereby at least one linking arrangement is provided between the at least two paging networks which controls data flow between the paging networks. The linking arrangement can be connected to the means for storing paging terminal location information of at least one of the paging networks. This can be used to get direct access to location information. The linking arrangement can also be connected to the means for treating paging information of at least one of the paging networks. Such an arrangement can enable the linking arrangement to control paging information within and/or between the paging networks.

It can be provided that at least one of the paging networks contains adapting means to enable interworking with the linking arrangement. In this preferred embodiment some functions necessary for a data flow between the paging networks can be carried out by units integrated into the paging networks. An advantage would be that the linking arrangement would become cheaper and easier to construct.

Another preferred embodiment would be that the paging network structure remains unchanged when connected to the linking arrangement. the linking arrangement then is equipped to carry out all necessary actions to ensure the data flow functionalities. An advantage would be that different paging networks can easily be linked together without any investments form the side of the network operators so that the system becomes very flexible. Also updates of the linking system would only affect the linking arrangement and not the networks.

Another object of the invention is a linking arrangement for controlling data flow between independent paging networks with paging terminals, which contains means for treating location information assigned to paging terminals of at least one of the paging networks. It can also contain means for treating paging information assigned to paging terminals of at least one of the paging networks.

Yet another object is a method for controlling data flow between independent paging networks with user terminals, whereby location information of paging terminals of the paging networks is stored in the paging networks, where the data flow between the data networks is controlled by a linking arrangement independent form the paging networks. The linking arrangement can access location information of at least one of the paging networks. The linking arrangement can also treat paging information assigned to paging terminals of at least one of the paging networks. It can be achieved, especially by special functionalities of the linking arrangement concerning location and paging information treating, that the linking arrangement supports roaming of paging terminals of at least one of the paging network into the area of at least one further of the paging networks. Therefore it may be necessary that the linking arrangement takes over location information and/or paging information from at least one of the paging networks to directly initiate paging in at least one further paging network or to hand over the information to at least one further paging network so that paging can be initiated by the at least one further paging network.

Paging information originating from one of the paging networks can be transferred at least partly in transparent mode via at least one of the further paging networks, which means that parts of the transmission way from the originating paging network to the pager and vice versa can be done in transparent mode or even the whole way can be done in this mode. It is also possible that only parts of the paging information are transferred in transparent mode, e.g. only the message to be read by the user of the paging terminal. This makes handling of the paging information much easier as the paging information remains at least partly unchanged when transferred in the system.

Another object of the invention is an access and linking arrangement, especially for a method or arrangement described before, attached to at least to one one way paging network, which facilitates the Calling Party and Subscriber interactive or non interactive messaging in stand alone or interconnected one way paging networks having one way or two way access facilities. It is possible that there are provided two separate arrangements, one access and one linking arrangement, or that both form one unit carrying out both features. It is also possible that features described for the linking arrangement can be taken over by the access arrangement and vice versa.

The one way paging networks of such kind can be either modified or used as such without any modifications. Messages to be acknowledged sent by the access and linking arrangement to the one way paging networks may be coded in transparent messages, which are passed through the one way paging systems unmodified.

The linking arrangement preferably facilitates acknowledgments and retransmits in stand alone or interconnected one way paging networks having one way or two way access facilities.

Pager location information can be used to transmit the page only via the interconnected one way paging networks' Paging Area on which the pager currently is located. Furtheron paging subscribers subscribing to a paging network linked with the linking arrangement can roam on interconnected one way paging networks which may or may not be linked with the linking arrangement.

The one way paging networks are preferably ERMES networks. The interconnection between the one way paging networks is preferably ERMES l4.

The linking arrangement may be linked with the Pagers (Paging terminal) using a data communication path. This data communication path is preferably GSM SMS communication.

The access arrangement, may be linked with the linking arrangement, and one way standalone or interconnected paging networks, and may facilitate subscriber replies to paging messages to be routed to the Calling Party on line or off line.

The following description discloses some special examples of the invention.

A two way messaging possibility in a paging system brings a lot of new possibilities for both calling parties and subscribers. The two way capability can be implemented as an internal service within the system or it can be provide clear messaging benefits to the users. The first one is called the Basic two way Delivery (B2D) service and the latter one the Calling Party - Subscriber two way Messaging (CPSM) in this paper.

### Basic two way delivery service (B2D service)

### Introduction

The Basic two way delivery service implements acknowledged page delivery to a pager. A page is sent to the pager using a one way paging infrastructure. The receiving pager(s) acknowledge(s) the page using the GSM SMS service. If the page is not acknowledged or the page is acknowledged to be corrupted, the page is resent via the paging infrastructure up to a defined maximum count. Optionally the page can also be delivered using the GSM SMS service as the last resort. The Basic two way delivery service intends to ascertain the page delivery process. It does not have the mechanisms to acknowledge the page delivery to the Calling Party. Page delivery acknowledgment to the Calling Party is included in the Calling Party - Subscriber two way messaging service, which is covered below.

### Automatic roaming

In one way paging system the paging network do not know where the pager is located. For this reason the page is normally sent on unnecessary large area and thus consuming system radio capacity everywhere where the page is sent. Air time savings can be more than 90%, if the page is sent only on the PA (Paging Area), where the pager is located. Many paging systems also support so called roaming where the subscriber can call in and instruct the system where his pages should be sent. The roaming can be made automatic in TwinSys by the fact that the pager location is known either from a report from the pager indicating the paging area where it is currently located or from the Cellular system location register. The pages destined for a certain pager can now be sent only on the PA where the pager is currently located. This can increase the paging system radio capacity considerably if the area served by the system is split into many Paging Areas. The automatic roaming can also work with TwinSys systems in other countries by coordinating and naming the foreign Geographical Areas (GA) based on the foreign Paging Areas. This arrangement could also make the digitized voice paging a possibility.

### Calling Party - Subscriber two way messaging (CPSM service)

### Introduction

The Calling Party - Subscriber two way messaging service facilitates two way messaging between the Calling Party and the Subscriber on-line i.e. in real time or off line i.e. using paging in combination with media like email.
One call scenario for the Calling Party - Subscriber two way messaging could proceed as follows:
The calling party calls to the Web page entry page of the TwinSys service. The Web page interactively guides the caller through the process of entering a page to the intended TwinSys paging subscriber. The paging system automatically detects whether the paging subscriber is a two way TwinSys subscriber or an one way paging subscriber. If the subscriber is a two way subscriber, the system asks whether the calling party waits for the reply on line in which case he/she has the possibility to send further messages to the subscriber later on to continue the dialogue with the him/her, or to which address the reply will be sent. The reply delivery destination can be one or more from the set of supported media like a pager, email, SMS etc. The reply messages are also stored in the General acknowledgment database, from where the calling parties can retrieve the replies anytime by giving the password given to them by the system when the page is accepted. The system processes the page request according to the requested ERMES services and delivers the page to the subscriber's pager. The subscriber enters his/her reply which is sent via SMS service to the paging system, which then delivers the replay to the calling party according to the instructions given during the page entry time. If the calling party hangs on and waits for the reply the response from the calling party is routed to the Web session and displayed on the web page. The calling party has then the option to send further messages to the same subscriber or other subscribers. The subscriber can be either a single subscriber or a group. In the later case the dialogue can continue with the whole group.

### Calling party page delivery acknowledgments

### General

For each access method a default calling party delivery acknowledgment method is defined. Usually this is the same method (network and user protocol) as used by the calling party, but can also be defined to be some other acknowledgment method supported by the system.

### PSTN voice access (DTMF, voice recognition, pulse phone)

There are two alternatives for acknowledgment via telephone: 1) Immediate acknowledgment while the calling hangs on until the delivery acknowledgment can be delivered during the same call and 2) A separate acknowledgment using an outcall initiated by the paging system. The latter one can also be used in connection with any other calling party access method according to the calling party instructions. In both cases the acknowledgment is done using voice prompts. Calling party using this access method can instruct the system to use also other delivery acknowledgment methods for delivering the page delivery acknowledgment.

### PSTN modem call

In principle the same is true here what has been said above in PSTN voice access except prompts are done using the data protocol used by the calling party or instructed by the calling party. However in the most cases the user device is not ready to receive calls asynchronously. Calling party using this access method can instruct the system to use other delivery acknowledgment methods for delivering the page delivery acknowledgment.

### UUS1/3

The same is true here what has been said above in PSTN voice access except prompts can in addition to voice prompts be done using the data protocol used by the calling party. Calling party using this access method can instruct the system to use other delivery acknowledgment methods for delivering the page delivery acknowledgment.

### X.25 access

In principle the same is true here what has been said above in PSTN voice access except prompts are done using the data protocol used by the calling party or instructed by the calling party. However in the most cases the user device is not ready to receive calls asynchronously. Calling party using this access method can instruct the system to use other delivery acknowledgment methods for delivering the page delivery acknowledgment.

### Web access

The same is true here what has been said above in PSTN voice access except prompts are done using the web data protocol used by the calling party or instructed by the calling party. Calling party using this access method can instruct the system to use other delivery acknowledgment methods for delivering the page delivery acknowledgment.

### Mail access (internet mail or X.400)

These are connectionless access methods and consequently the delivery acknowledgment is delivered using separate mail. By default the delivery is done to the same mail address from where the page request was initiated. This delivery method can be also used by calling parties using other access methods by instructing the system appropriately. Calling party using this access method can instruct the system to use other delivery acknowledgment methods for delivering the page delivery acknowledgment.

### Direct access

Direct access is an access method where the calling party is continuously connected to the system. It is used by e.g. Bureau service and Corporate subscribers with a leased line. The acknowledgment can be delivered to these users any time (except when the connection is down) using the protocol they are using. If the connection is down the acknowledgment can be queued until the connection is up again. Calling party using this access method can instruct the system to use other delivery acknowledgment methods for delivering the page delivery acknowledgment.

### Bureau service

The calling party can hang on until the acknowledgment can be told by the bureau service agent to him/her or he /she can call later and request for the acknowledgment. The bureau agent can retrieve the acknowledgment from the bureau service databases or from the General acknowledgment database (explained later). Calling party using this access method can instruct the bureau agent to use other delivery acknowledgment methods for delivering the page delivery acknowledgment.

### SMS

This is a connectionless access method and consequently the delivery acknowledgment is delivered using separate SMS message. By default the delivery is done to the same SMS address from where the page request was initiated. This delivery method can be also used by calling parties using other access methods by instructing the system appropriately. Calling party using this access method can instruct the system to use other delivery acknowledgment methods for delivering the page delivery acknowledgment.

### TwinPager

TwinPagers are connected to GSM SMS service and consequently they can use SMS to send pages. The delivery acknowledgment can be done either using the above explained SMS method or alternatively a page can be sent to acknowledge the delivery of the MS initiated page request. Calling party using this access method can instruct the system to use other delivery acknowledgment methods for delivering the page delivery acknowledgment.

### General acknowledgment database

The General acknowledgment database contains all page delivery acknowledgments received by the system from the pagers. The calling parties can request from this database page delivery acknowledgments for pages they have earlier made by entering the AdC and the password the system has given them during the page entry.

### Corporate subscribers (Fixed subscribers)

Corporate subscribers can use many of the access methods mentioned here and the delivery acknowledgment can be delivered to them as for any other calling party. However they are also known as subscribers in the system and thus a special delivery acknowledgment storage can be created for them which they can use by identifying themselves without giving any special password which is used in connection of the general acknowledgment database.

### Page delivery acknowledgment via a paging system

The calling party using any of the above mentioned access methods can instruct the system to deliver the page delivery acknowledgment using a page to the calling parties pager.

### Page delivery acknowledgment to the calling parties voice box

The calling party using any of the above mentioned access methods can instruct the system to deliver the page delivery acknowledgment to his mailbox as spoken message.

### Page delivery acknowledgment to the calling parties fax

The calling party using any of the above mentioned access methods can instruct the system to deliver the page delivery acknowledgment to his fax.

### Subscriber acknowledgments

The subscriber has two ways to reply on the pages he receives:
- Page acknowledgment using preselected alternatives,
- Free format acknowledgment to received pages.
The subscriber can also initiate messages asynchronously by himself using the TwinPager. These are covered in the explanations below.

### Subscriber services

Subscriber services which the two way TwinSys facilitates are the following:

### Received pages acknowledgments

- Page acknowledgment using preselected alternatives
- Free format acknowledgment to received pages

### Page entry

The subscriber can initiate a page entry by using his TwinPager independently of the received pages.

### Management of paging features

The TwinPager can be used to manage the paging system subscriber features like temporal barring and deferred delivery.

### Acknowledgments via paging

A calling party, who is also a subscriber in a paging system, can instruct the system to deliver the reply message from the paged party to is/her pager.

### SMS messaging

A TwinPager can be used to send and receive SMS messages as a normal GSM phone. Consequently all SMS based services are available.

### Paging information services

Services can be constructed where the request for a service is done using SMS and the reply via paging. (stock exchange info, weather reports, bank account transactions.

### Multi mode function

The TwinPager can be designed to function in several modes: 1) TwinSys mode 2) TwinSys mode + continuos SMS 3) Only SMS use. These modes can be selected depending on what services are used and/or what networks are available.

### Web

Internet browser: commands are sent using SMS and replies are received via paging network.

### SMS paging

SMS as backup for paging network. If the paging system detects that a page can not be delivered due to missing interoperator agreement, base stations being down, satellite breakages, no coverage on the area indicated by GSM location register, pager inform about acknowledgment of paging coverage using SMS or any other reason the system can use SMS to send the message to the pager.

### Logical System Models

**General** It has been analyzed separately which paging air interface protocols are suited to be used in connection with the TwinSys. In this analysis the ERMES air interface protocol was the only one which passed all requirement.
The following list is a subset of the analyzed requirements. It however lists the main points which caused the rejection of the POCSAG and FLEX protocols:
- Support for matching the send page and pager acknowledgment.
- Two way roaming has to be possible in Europe.
The drawings and explanatory texts detail the logical structure of the system, which is used to fulfill the requirements of each service detailed above. The ERMES system structure is used as a basic model and additional structures to fulfill the two way services are added to the ERMES model.

### Ermes model

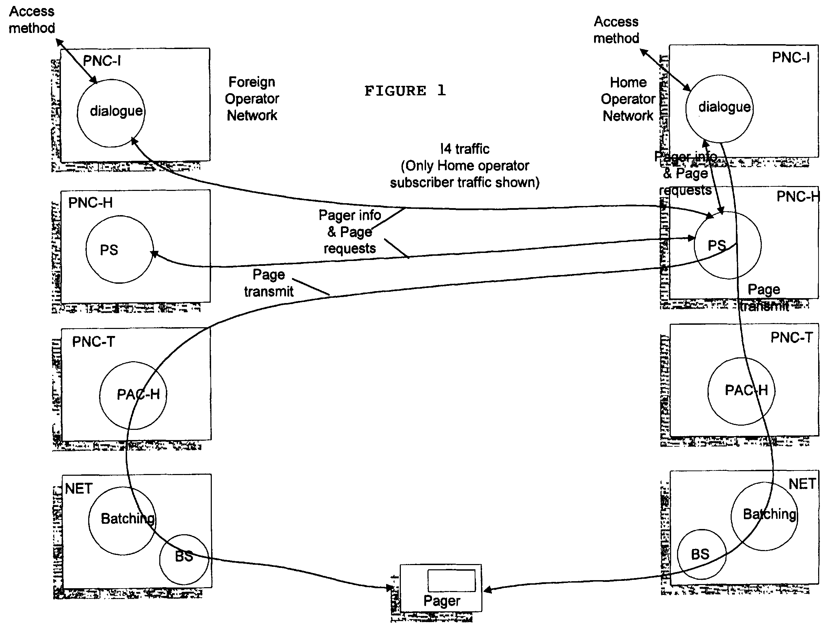

The ERMES system is described in full in ETSI recommendation ETS 300 133-1.7. The ERMES system logical structure is shown in Figure 1. It covers only paging messages related activities. Other paging system activities like subscriber feature management and O&M are left out to simplify the representation and because the purpose of the model is to help in understanding the TwinSys additions to the one way paging system. The TwinSys mainly deals with the page delivery process and acknowledgments to the calling parties.
The Figure shows two ERMES nodes connected to each other via l4 link. The one on the right is considered as the home operator system and the one on the left a foreign operator network with whom the home network operator has an interoperator agreement.
Each operator network infrastructure is split into four subsystems: PNC-I, PNC-H, PNC-T and NET. The PNC-I (Paging Network Controller, Input) handles all accesses to the system. It communicates with appropriate PNC-H (Paging Network Controller - Home) to get pager information related to the paging call in progress. The PNC-H is selected based on in what network the party to be paged is a subscriber. The page request is then send to the PNC-H in the subscriber's home network. The PNC-H executes the requested services and transmits the page to the PNC-Ts (paging Network Controller - Transmit) which controls the Paging Areas and Geographical Areas on which the page is to be sent. The PNC-T then transmits the page to the NET (Transmission Network).
The page request to the PNC-H can come also from another PNC-H, when the first PNC-H group subscriber has foreign members belonging to the second PNC-H.

### Analysis of alternative two way models

In the following analysis it is assumed that the following requirements exist for the TwinSys solution:
- One way Ermes traffic has to be handled in a normal fashion in a TwinSys system.
- It has to be possible to page a TwinSys subscriber using an access method, which does not support TwinSys functionality. This kind of an access method can be in a TwinSys system or it can be in a normal ERMES system. Both can be either home or foreign regarding the subscriber to be paged.
- TwinSys solution has to support roaming, i.e. there can be foreign TwinSys operators.
- It must be possible to do TwinSys page transmit via a foreign one way Ermes system (PNC-T)
- TwinSys page retransmission is done using the same message number as the original message had (also via a foreign system).
The goal stated in the beginning of this paper to seek primarily for a solution which would not require any changes in the existing one way systems elsewhere except in the accesses, is taken as a important factor in the analysis. The solution with no changes in the existing infrastructures elsewhere except in the accesses is called Loosely coupled solution and the solution which allows changes in the existing systems elsewhere except in the air interface, is called Tightly coupled solution.

**TABLE 3.1**

| Different configurations for TwinSys | | | |
|---|---|---|---|
| | Home/Foreign TwinSys systems | Home/Foreign TwinSys systems with one way accesses | Home TwinSys system and foreign normal one way system |
| Calling Party Services available | The CPSM service in the home and foreign system. | The B2D service for Calling Parties using one way accesses. | The CPSM service in the home system and the B2D service for Calling Parties in the foreign system. |
| | | | |
| Loosely coupled solution | - Calling Party acknowledgment routing information is taken from the Reply instr. message from the access to the TwinServer. | - Information about sent pages taken from l3 transmit message | - Calling Party acknowledgment routing information is taken from the Reply instr. message from the home access to the TwinServer. |
| | | - Normal one way Ermes page transmit message used. | |
| | | | - Information about sent pages taken from l3 transmit message |
| | | - Retransmission done using page transmit message **(l4 transmit)** | |
| | - Information about sent pages taken from l3 transmit message | | |
| | | | - Transparent one way Ermes page transmit message used for pages from home accesses. Normal one way Ermes page transmit message used for pages from foreign accesses. |
| | - Transparent one way Ermes page transmit message used. | | |
| | - Retransmission done using page request message | | - Retransmission done using page request message for pages initiated in the home system. Retransmission done using page transmit message **(l4 transmit)** for pages initiated in the foreign system. |
| Tightly coupled solution | See TABLE 3.2 | - Normal page request + RIC and message number stored to indicate a send page | - Normal page request + RIC and message number stored to indicate a send page for pages initiated in the foreign system. For pages initiated in the home system see table 3.2 |
| | | - Normal one way Ermes page transmit message used. | |
| | | | - Normal one way Ermes page transmit message used for pages initiated in the foreign system. For pages initiated in the home system see table 3.2 |
| | | - Retransmission done using a page request | |
| | | | - Retransmission done using page request message for pages initiated in the home system. Retransmission done using page transmit message **(l4 transmit)** for pages initiated in the foreign system. |

**TABLE 3.2**

| Alternative solutions for Tighty coupled TwinSys when all networks are TwinSys networks | | | | |
|---|---|---|---|---|
| Message | Alternative 1 | Alternative 2 | Alternative 3 | Alternative 4 |
| Reply instruction message | -AdC | -AdC | not used | not used |
| | -password | -password | | |
| | - reply address | - reply address | | |
| Page request | Transparent page request with the following fields | Transparent page request with the following fields | Transparent page request with the following fields | Transparent page request with the following fields |
| | | - AdC | | - AdC |
| | - AdC | - TwinSys flag | | - TwinSys flag |
| | - TwinSys flag | - transparent msg with the following fields: | - AdC | - transparent msg with the following fields: |
| | - transparent msg with the following fields: | | - TwinSys flag | |
| | | | - transparent msg with the following fields: | |
| | | - password | | - password |
| | - password | - charset | | - charset |
| | - charset | - O1E* | | - reply addresses |
| | - O1E* | | - password | - O1E* |
| | | | - charset | |
| | | | - reply addresses | |
| | | | - O1E* | |
| Info about sent pages | Page transmit + | Page transmit + | Page transmit + | Page transmit + |
| | - AdC | - AdC | | - AdC |
| | - GAdC | - GAdC | - AdC | - GAdC |
| | - FAdC | - FAdC | - GAdC | - FAdC |
| | - password | - password | - FAdC | - password |
| | | | - password | - reply addresses |
| | | | - reply addresses | |
| Page transmit | Normal one way paging page transmit used including the following fields: | Transparent page transmit used with the following fields: | Normal one way paging page transmit used including the following fields: | Transparent page transmit used with the following fields: |
| | | - RIC | | - RIC |
| | | - msg# | | - msg# |
| | - RIC | - transparent msg with the following fields: | | - transparent msg with the following fields: |
| | - msg# | | - RIC | |
| | - paging msg | | - msg# | |
| | - O1E* | - op=page trans | - paging msg | - op=page trans |
| | | - paging categ | - O1E* | - paging categ |
| | | - retrans flag | | - retrans flag |
| | | -charset | | - charset |
| | | - encryption flag | | - encryption flag |
| | | - paging msg | | - paging msg |
| | | -O1E* | | - O1E* |
| Pager ack | - RIC | -RIC | - RIC | - RIC |
| | - msg# | - msg# | - msg# | - msg# |
| | - delivery status | - delivery status | - delivery status | - delivery status |

| | | | | |
|---|---|---|---|---|
| * O1E means all other one way Ermes fields | | | | |

The loosely coupled solution is covered below, and the Tightly coupled solution also below. The combinations of the two solutions is discussed also below. The system has to be able to handle configurations, where some accesses and/or foreign systems are according to standard Ermes specification. There are subchapters, where the following configurations are handled: All systems are TwinSys systems, Accesses in the home and foreign TwinSys systems are one way Ermes accesses, and the home system is a TwinSys system and the foreign system is a normal Ermes system.

### The Loosely coupled solution

In all Figures from 1 to 7 the dashed lines indicate existing messages in one way Ermes systems. The continuous line indicate the TwinSys additions to make an one way paging system a two way TwinSys system.

The text below cover three different usage configurations for the TwinSys system.

### All networks - Home and Foreign - are TwinSys networks

### Calling party services

When all the interconnected paging networks have full TwinSys capabilities, Calling Parties accessing any network can utilize all the CPSM services.

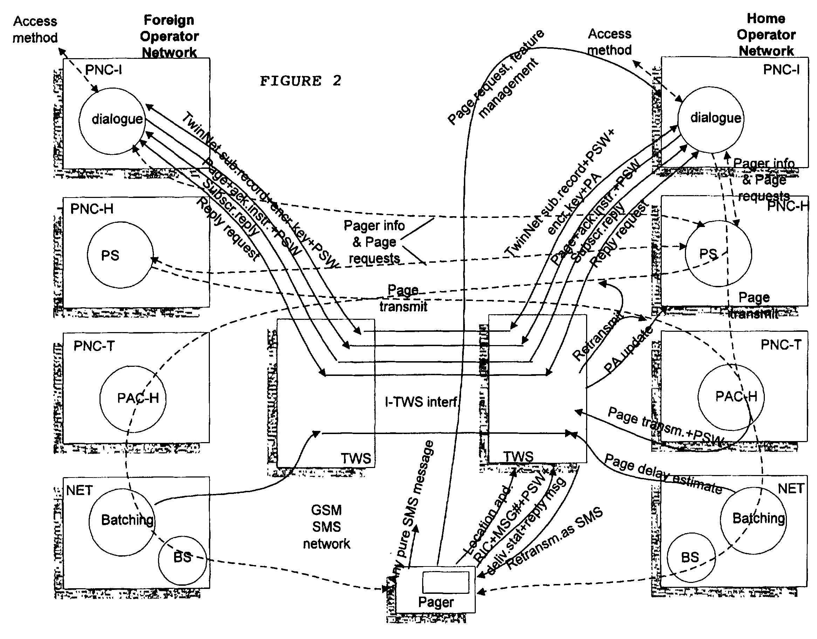

The Figure 2 shows the CPSM overlaid on top of the ERMES paging model, when both paging networks are TwinSys networks. However some operators and/or subscribers may choose to utilize only the B2D service in a network which has full CPSM service. This is also made possible. The Figure also shows Subscriber services. Introduction of the CPSM on top of an one way Ermes network, requires new components. The needed additional components and their interworking in a normal one way Ermes paging network are also shown in Figure 2.
The additional components needed are the TwinServer (TWS), the TwinPager, and the GSM SMS network.
A typical call scenario proceeds as follows:
A call comes in via some access method into the PNC-I, where a dialogue is started for the call. Based on the AdC the dialogue requests Pager information (subscriber's one way database information) from the home or a foreign PNC-H, and TwinNet subscriber information, a Password, and optionally the subscriber encryption key and the Paging Area where the pager currently is located from the home or a foreign TWS. The AdC can be an individual subscriber, or a common RIC or an individual RIC group subscriber. The case mentioned in the beginning of this chapter, where only the B2D service is provided, the TWS behaves as if the subscriber is not a two way subscriber when the PNC-I requests for the TwinNet subscriber database information. The password has to be unique among all stored, unacknowledged page requests and newly allocated passwords for the ongoing calls. The password is only created if the subscriber is a TwinSys subscriber. The dialogue proceeds for the most part as in a normal one way paging network. At some stage in the dialogue the Calling Party is asked for the Reply Address(es), where the reply from the Subscriber is routed to. One of these Address Codes may indicate that the Calling Party wishes to hang on until the reply is delivered to him on line. The Password is prompted to him to be used later if he chooses to call in later to request the reply from the subscriber to his message. The Calling Party may indicate an empty Reply Address in which case no reply from the subscriber is possible and this is also indicated in the page request and in the page transmit messages. However this does not prevent the B2D service from being executed. The B2D can also in some cases be prohibited from being executed by indicating it in the sent page.
When the Calling Party commands to send the page, the dialogue sends a Page request to the home or foreign PNC-H depending on the AdC. The Page request contains optionally the Choice Of Destination (COD) supplementary service indicating the pager location PA, and the Password which is embedded in a transparent message. All types of pages are sent as transparent message page requests. This conventions allows the underlying one way paging system to remain unchanged. The paging message is embedded in the transparent message part even if it is tone only, numeric, alphanumeric or transparent message. The Page request is also sent to the TWS along with the Reply Address(es), where they are stored in the Page database.
The page is processed in the PNC-H and the PNC-T in the same way as in an one way paging network. The PNC is configured in such a way that each TwinSys paging subscriber has a special Paging Area defined in his Service Area, which belongs to a separate PAC unit. When the PNC-T transmit the page to a separate PAC unit, it is in fact routed to the TWS using the standard PAC interface (l3 in Ermes). The page transmit is matched in the TWS with the earlier stored page request using the common Password field. The page is also transmitted on the Paging Area on which the pager is currently located. This is known by the PNC-H either from the COD service PA in the page request or from the PA update message from the TWS to the PNC-H. The latter can be implemented via the one way paging network subscriber management interface via the operations and maintenance parts of the PNC-H. The TWS may also optionally automatically set up roaming for the subscriber on the PA where the pager is located currently, by using a standard interface like the UCP. When the TwinPager receives the page it or the subscriber generates an acknowledgment to the home TWS containing the RIC, the message number, delivery status, the Password, the TwinPage flag, and the Subscriber reply message. The TwinPage flag is used by the TWS to verify that the pager has been able to differentiate between the TwinSys coded transparent message and the normal one way transparent message. If the pager has miscoded the one way transparent message as a TwinSys transparent message the TWS transmits the message again but this time as TwinSys message. The Password, or the RIC and the message number are used to match the acknowledgment with the Page request and the Page transmit.
The TWS when receiving the acknowledgment matches it with the respective Page request, and sends the subscriber reply to the Calling Party using the Reply Address(es) given by him during the page entry dialogue. The TWS also stores the reply and updates the message database with ok delivery status. If the call was made in a foreign network the TWS passes the acknowledgment information to the TWS of the foreign network which carries out the acknowledgment to the calling party. The calling party has also the option to call in and request the reply information from the subscriber by specifying the password and the AdC. The PNC-I then retrieves the reply from the TWS. If the request is done in a foreign network the foreign TWS requests the information from the home network based on the AdC. When the TWS receives the page transmit message it starts a timer based on either the ERMES standard maximum delivery times for different priorities or based on the standard Ermes priority queues 90% delay values from the PAC to the PNC. An extra l3 interface is configured from the PAC to the TWS via which this information is received. If the timer goes off before the pager has acknowledged the page, the TWS starts a configurable retransmit procedure. The retransmit procedure can be configured in many ways regarding how often, on what areas and what kinds of retransmits are sent. A special tone only message (i.e. one tone reserved for retransmits) can be sent to the pager asking the pager to report its location. The retranmission can either be done using Ermes standard l4 page transmit operation or using the l3 type page transmit directly to the PAC. If the retansmit is done in a foreign network using the latter technique the home TWS sends the retransmit to the foreign TWS, which then uses the l3 type message to retransmit the paging message. As a last resort the TWS can use the SMS service to deliver the page to the TwinPager if the delivery via the paging system fails.
The TwinPager updates it location information to the TWS. The TWS has the option to use the location information when retransmitting messages.

### Subscriber services

### Received pages acknowledgments

This issue is already covered in the text above.

### Page entry

The subscriber can initiate a page entry by using his TwinPager independently of the received pages.
This is one access method amongst many others. The page request is done using SMS and the reply address can be specified along with the page request. The natural reply address is the paging AdC. However the default reply address is the MSISDN because it can be used automatically.

### Management of paging features

The TwinPager can be used to manage the paging network subscriber features like temporal barring and deferred delivery.
This is one access method amongst many others. The feature management request is done using SMS and the acknowledgment address can be specified along with the feature management request. The natural acknowledgment address is a paging AdC. However the default reply address is the MSISDN.

### Acknowledgments via paging

A calling party, who is also a subscriber in a paging network, can instruct the network to deliver the reply message from the paged party to his/her pager.
This simply means that when the network asks for the address where the paged party reply will be routed, the calling party enters his/her pager address.

### SMS messaging

A TwinPager can be used to send and receive SMS messages as a normal GSM phone. Consequently all SMS based services are available.
This is totally SMS dependent service. It may require that the TwinPager is in continuous SMS mode. See corresponding chapter below.

### Paging information services

Services can be constructed where the request for a service is done using SMS and the reply via paging. (stock exchange info, weather reports, bank account transactions.
A special information server is needed which understands the combined functioning of the SMS media for requests and paging for responses. The TWS may optionally house such a server.

### Multi mode function

The TwinPager can be designed to function in several modes: 1) TwinSys mode 2) TwinSys mode + continuous SMS 3) Only SMS use. These modes can be selected depending on what services are used and/or what networks are available.
The TwinSys uses the SMS very sparingly and does not require continuous messaging availability. However some services mentioned above may require more or less continuous SMS connection.

### Web

Internet browser: commands are sent using SMS and replies are received via paging network.

### SMS paging

SMS as backup for paging network. If the TWS detects that a page can not be delivered due to missing interoperator agreement, base stations being down, satellite breakages, no coverage on the area indicated by mapping of the GSM location register contents to Paging Areas, pager informs about missing coverage using SMS or any other reason, the TWS can use SMS to send the message to the pager.

### Encryption

Messages can be encrypted between the PNC-I and the TwinPager, and the TwinPager and the TwinServer.

### Operator services

### Remote pager programming

The operator can using the transparent messages to program over the air the TwinSys traffic specific parameters, service provisioning related parameters, encryption management, and load new software or scripts to the pager. The programming messages can optionally be encrypted.

### Home/Foreign TwinSys networks with one way accesses

### Calling Party services

The CPSM service utilization depends on the PNC-I support for the service. All access methods may not support the CPSM and many of the foreign ERMES operator nodes may not support the CPSM. In these cases only B2D service is used. The Basic two way Delivery (B2D) service is a service, which is provided for the TwinSys subscribers, who are paged from an access, which does not support the TwinSys functionality.
The B2D service adds page delivery reliability to the one way ERMES service. It involves mainly the transmission parts of a paging network. There are two options for resending of a page as in the previous chapter. The TWS can also utilize the pager location information located in the TWS when doing the resending.

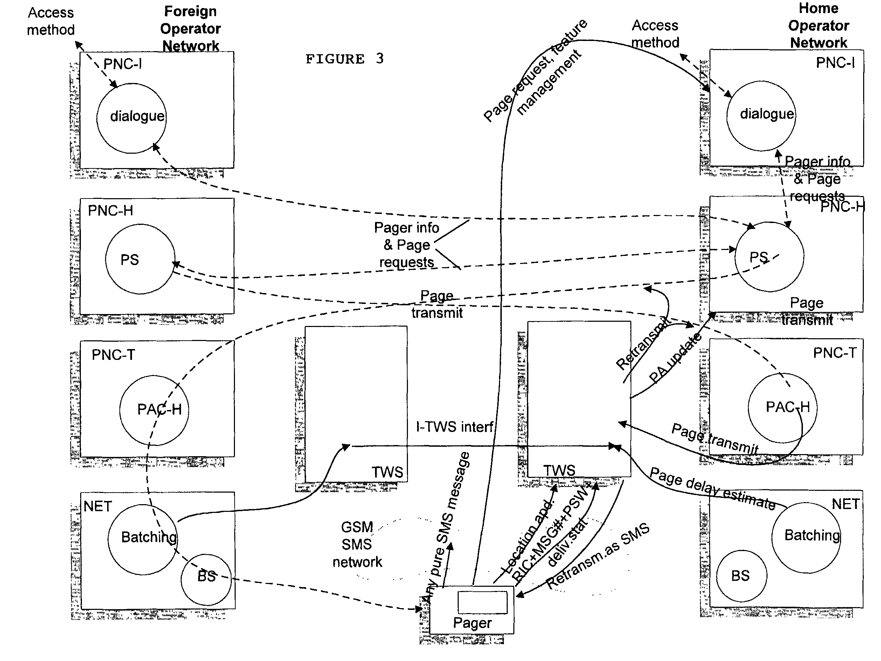

The needed additional components and their interworking in a normal one way Ermes paging system are shown in Figure 3.
The additional components needed are the TwinServer (TWS), the TwinPager, and GSM SMS network.
The page is initiated and processed in the PNCs as normal one way ERMES paging messages.
The page is processed in the PNC-H and the PNC-T in the same way as in an one way paging network. The PNC is configured in such a way that each TwinSys paging subscriber has a special Paging Area defined in his Service Area, which belongs to a separate PAC unit. When the PNC-T transmit the page to a separate PAC unit, it is in fact routed to the TWS using the standard PAC interface (l3 in Ermes). The information of special importance are the RIC, message number and the paging message itself. The RIC and the message number are used to identify the page, and the paging message is needed if the page has to be resent later. The page transmit is stored in the Page database by the TWS. The page is also transmitted on the Paging Area on which the pager is currently located. This is known by the PNC-H from the PA update message from the TWS to the PNC-H. The TWS may also optionally automatically set up roaming for the subscriber on the PA where the pager is located currently, by using a standard interface like the UCP.
When the TwinPager receives the page it generates an acknowledgment to the home TWS containing the RIC, the message number, delivery status, and the TwinPage flag. The TwinPage flag is used by the TWS to verify that the pager has been able to diffentiate between the TwinSys coded transparent message and the normal one way transparent message. If the pager has miscoded the one way transparent message as a TwinSys transparent message the TWS transmits the message again but this time as TwinSys message. The RIC and the message number are used to match the acknowledgment with the Page transmit.
The TWS when receiving the acknowledgment matches it with the respective Page transmit and updates the message database with ok delivery status.
When the TWS receives the page transmit message it starts a timer based on either the ERMES standard maximum delivery times for different priorities or based on the standard Ermes priority queues 90% delay values from the PAC to the PNC. An extra l3 interface is configured from the PAC to the TWS via which this information is received. If the timer goes off before the pager has acknowledged the page, the TWS starts a configurable retransmit procedure. The retransmit procedure can be configured in many ways regarding how often, on what areas and what kinds of retransmits are sent. A special tone only message (i.e. one tone reserved for retransmits) can be sent to the pager asking the pager to report its location. The retransmission can either be done using Ermes standard l4 page transmit operation or using the l3 type page transmit directly to the PAC. If the retransmit is done in a foreign network using the latter technique the home TWS sends the retransmit to the foreign TWS, which then uses the l3 type message to retransmit the paging message. As a last resort the TWS can use the SMS service to deliver the page to the TwinPager if the delivery via the paging system fails.
The TwinPager updates it location information to the TWS. The TWS has the option to use the location information when retransmitting messages.

### Subscriber services

### Received pages acknowledgments

Received pages acknowledgments is not possible for pages initiated via non-TwinSys access.

### Page entry

The subscriber can initiate a page entry by using his TwinPager independently of the received pages.
This is one access method amongst many others. The page request is done using SMS and the reply address can be specified along with the page request. The natural reply address is the paging AdC. However the default reply address is the MSISDN because it can be used automatically. The TwinServer acts as a PNC-I.

### Management of paging features

The TwinPager can be used to manage the paging network subscriber features like temporal barring and deferred delivery.
This is one access method amongst many others. The feature management request is done using SMS and the acknowledgment address can be specified along with the feature management request. The natural acknowledgment address is a paging AdC. However the default reply address is the MSISDN. The TwinServer acts as a PNC-I.

### Acknowledgments via paging

Received pages acknowledgments is not possible for pages initiated via non-TwinSys access.

### SMS messaging

A TwinPager can be used to send and receive SMS messages as a normal GSM phone. Consequently all SMS based services are available.
This is totally SMS dependent service. It may require that the TwinPager is in continuous SMS mode. See corresponding chapter below.

### Paging information services

Services can be constructed where the request for a service is done using SMS and the reply via paging. (stock exchange info, weather reports, bank account transactions.
A special information server is needed which understands the combined functioning of the SMS media for requests and paging for responses. The TWS may optionally house such a server.

### Multi mode function

The TwinPager can be designed to function in several modes: 1) TwinSys mode 2) TwinSys mode + continuous SMS 3) Only SMS use. These modes can be selected depending on what services are used and/or what networks are available.
The TwinSys uses the SMS very sparingly and does not require continuous messaging availability. However some services mentioned above may require more or less continuous SMS connection.

### Web

Internet browser: commands are sent using SMS and replies are received via paging network.

### SMS paging

SMS as backup for paging network. If the TWS detects that a page can not be delivered due to missing interoperator agreement, base stations being down, satellite breakages, no coverage on the area indicated by mapping of the GSM location register contents to Paging Areas, pager informs about missing coverage using SMS or any other reason, the TWS can use SMS to send the message to the pager.

### Encryption

Not possible without modifying the PNC-I.

### Operator services

### Remote pager programming

The operator can using the transparent messages to program over the air the TwinSys traffic specific parameters, service provisioning related parameters, encryption management, and load new software or scripts to the pager. The programming messages can optionally be encrypted.

### Home TwinSys system and foreign standard one way system

### Calling Party services

When the home system has full TwinSys capabilities, and the foreign system is a normal Ermes system, Calling Parties accessing the home system can utilize all the CPSM services. Calling Parties accessing the foreign one way system sees only an one way system but internally the home system executes the B2D service also for these calls.

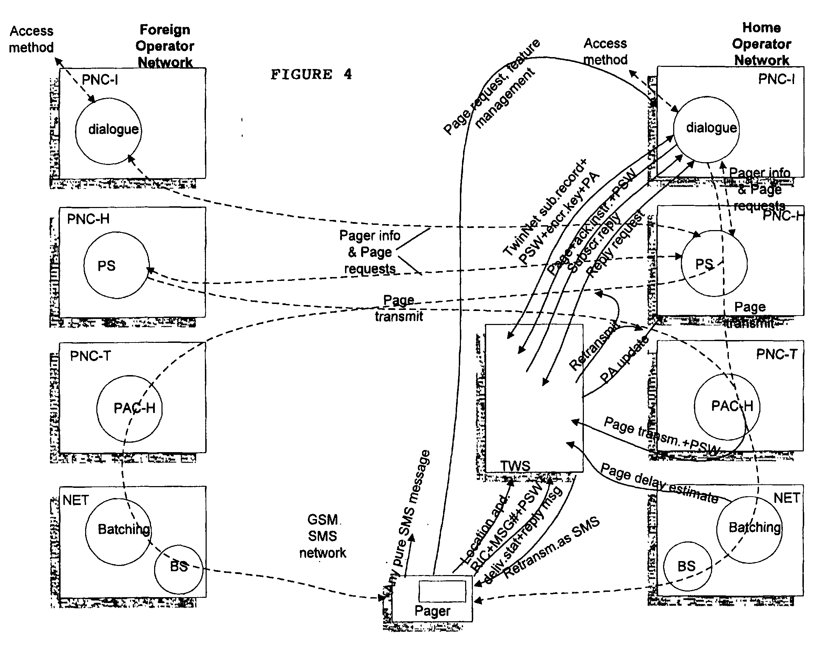

The Figure 4 shows the CPSM overlaid on top of the ERMES paging model, when only the home system is a TwinNet system. Also Subscriber services are shown. Introduction of the CPSM on top of the One way Ermes system, requires new components. The needed additional components and their interworking in a normal one way Ermes paging system are shown in Figure 4.
The additional components needed for the home system are the TwinServer (TWS), the TwinPager, and GSM SMS network.
The page requests and transmits initiated in the home TwinSys PNC-I are handled as explained above. The page requests and transmits initiated in the foreign standard Ermes system are handled as explained above.
When the TwinPager receives the page it or the subscriber generates an acknowledgment to the home TWS containing the RIC, the message number, delivery status, the Password if available, the TwinPage flag, and the Subscriber reply message. The TwinPage flag is used by the TWS to verify that the pager has been able to differentiate between the TwinSys coded transparent message and the normal one way transparent message. If the pager has miscoded the one way transparent message as a TwinSys transparent message the TWS transmits the message again but this time as TwinSys message. The Password, or the RIC and the message number are used to match the acknowledgment with the Page request and the Page transmit.

The TWS when receiving the acknowledgment matches it with the respective Page request, and sends the subscriber reply to the Calling Party using the Reply Address(es) if given by him during the page entry dialogue. The TWS also stores the reply and updates the message database with ok delivery status. The calling party has also the option to call in and request the reply information from the subscriber by specifying the password and the AdC in the home network. The PNC-I then retrieves the reply from the TWS.
When the TWS receives the page transmit message it starts a timer based on either the ERMES standard maximum delivery times for different priorities or based on the standard Ermes priority queues 90% delay values from the PAC to the PNC. An extra l3 interface is configured from the PAC to the TWS via which this information is received. If the timer goes off before the pager has acknowledged the page, the TWS starts a configurable retransmit procedure. The retransmit procedure can be configured in many ways regarding how often, on what areas and what kinds of retransmits are sent. A special tone only message (i.e. one tone reserved for retransmits) can be sent to the pager asking the pager to report its location. The retransmission can either be done using Ermes standard l4 page transmit operation or using the l3 type page transmit directly to the PAC (only in home network). As a last resort the TWS can use the SMS service to deliver the page to the TwinPager if the delivery via the paging system fails.
The TwinPager updates it location information to the TWS. The TWS has the option to use the location information when retransmitting messages.

### Subscriber services

### Received pages acknowledgments

Subscriber acknowledgments are not possible for pages initiated in a foreign standard Ermes system. However subscriber acknowledgments are possible for pages initiated in the home TwinSys system.

### Page entry

The subscriber can initiate a page entry by using his TwinPager independently of the received pages.
This is one access method amongst many others. The page request is done using SMS and the reply address can be specified along with the page request. The natural reply address is the paging AdC. However the default reply address is the MSISDN because it can be used automatically.

### Management of paging features

The TwinPager can be used to manage the paging network subscriber features like temporal barring and deferred delivery.
This is one access method amongst many others. The feature management request is done using SMS and the acknowledgment address can be specified along with the feature management request. The natural acknowledgment address is a paging AdC. However the default reply address is the MSISDN.

### Acknowledgments via paging

A calling party, who is also a subscriber in a paging network, can instruct the network to deliver the reply message from the paged party to his/her pager.
This simply means that when the network asks for the address where the paged party reply will be routed, the calling party enters his/her pager address.

### SMS messaging

A TwinPager can be used to send and receive SMS messages as a normal GSM phone. Consequently all SMS based services are available.
This is totally SMS dependent service. It may require that the TwinPager is in continuous SMS mode. See corresponding chapter below.

### Paging information services

Services can be constructed where the request for a service is done using SMS and the reply via paging. (stock exchange info, weather reports, bank account transactions.
A special information server is needed which understands the combined functioning of the SMS media for requests and paging for responses. The TWS may optionally house such a server.

### Multi mode function

The TwinPager can be designed to function in several modes: 1) TwinSys mode 2) TwinSys mode + continuous SMS 3) Only SMS use. These modes can be selected depending on what services are used and/or what networks are available.
The TwinSys uses the SMS very sparingly and does not require continuous messaging availability. However some services mentioned above may require more or less continuous SMS connection.

### Web

Internet browser: commands are sent using SMS and replies are received via paging network.

### SMS paging

SMS as backup for paging network. If the TWS detects that a page can not be delivered due to missing interoperator agreement, base stations being down, satellite breakages, no coverage on the area indicated by mapping of the GSM location register contents to Paging Areas, pager informs about missing coverage using SMS or any other reason, the TWS can use SMS to send the message to the pager.

### Encryption

Messages can be encrypted between the PNC-I and the TwinPager, and the TwinPager and the TwinServer.

### Operator services

### Remote pager programming

The operator can using the transparent messages to program over the air the TwinSys traffic specific parameters, service provisioning related parameters, encryption management, and load new software or scripts to the pager. The programming messages can optionally be encrypted.

### Component funtionalities

The following chapters list functionality which has to be added to components in the ETSI ETS 300 133-1..7 to fulfill the TwinSys requirements.

### PNC-I

The user dialogues and supporting software needs the following functional additions:
- A request from the TWS for the TwinSys subscriber database information, a password for the call, and optionally encryption key and PA, where the pager Is located.
- A request from the Calling Party for the Reply Address(es).
- Prompting the password for the Calling Party
- Encryption of the paging message
- Encoding of the paging message and the password into a transparent message, and sending it with the PA COD service to the PNC-H.
- Sending the page request along with the Reply Address to the TWS.
- Handling of the Subscriber reply acknowledgment routing.
- Handling of Subscriber reply acknowledgement request call.

### PNC-H

No changes.

### PNC-T

No changes.

### NET

No changes.

### TwinPager

The TwinPager has to function as a normal ERMES pager and in addition have the following functionalities:
- Logic for parsing the TwinSys transparent page.
- Decryption and encryption.
- Handling of service provisioning messages.
- SMS connectivity for sending and receiving SMS messages..
- Fragmentation support to be able to receive longer paging messages than the maximum SMS message length by splitting and concatenating the paging message.
- Generation of automatic and user entered reply messages for received pages.
- Page entry and feature management functionality.
- Generation of user entered free format SMS messages.
- Reporting of PA information autonomously or on request from the TWS.

### TwinServer

The TwinServer has the following databases

Two way pager database:
- AdC: Address code
- RIC: Radio Identification Code of a two way pager
- PA: Location information of a pager in terms of Paging Area
- OPID: Location information of a pager
- GSM_loc: Location information of a pager in terms of GSM cell
- MSISDN: Pager GSM number
- SUBT: Subscription type
- EKEY: Encryption key

### Page storage

- AdC: Address code
- SMSG: Sent message contents
- PASSWORD: Unique identification of the generated page
- MNRO: Message number
- ACK: Acknowledgment received for the page from the pager (Yes/No)
- RMSG: Reply message contents
- RA: Address to which reply will be sent
- REPC: Repeated pages count
- IREP: Interval for repetition

The following functionality is provided by the TwinServer:
- Generates on request from the access units a unique password for each two way paging call and returns it along with the two way subscriber database information, a password for the call, and optionally encryption key and PA, where the pager is located to the requester.
- Stores the page request and the Reply Address to the Page database.
- Matches the page transmit message it receives via the l3 interface with the respective page request using the password as a common field.
- Read optionally the standard Ermes priority queues 90% delay values from the PAC.
- Starts a retransmission procedure if acknowledgment from a pager has not arrived within specified time. Sending of a SMS message containing the paging message may be part of the retransmission procedure. Other functionality which may be part of the retransmission procedure are retransmitting the original message, and sending of a special tone only message to a TwinPager requesting the pager to update its location.
- Connects to GSM SMS service to receive reply messages and location updates from two way pagers and to send replays to calling parties as SMS messages.
- Reply to calling parties asking for replies to their paging calls they have earlier made.
- Maintaining of the pager location and optionally updating it to the PNC-H.
- Encryption and decryption.
- Checks based on the TwinPage flag that the TwinPage has interpreted the normal one way transparent message correctly. If not resend the page as a TwinPage.
- Communicate with foreign TWSs regarding access related messaging, getting the PA delay information, and retransmits.
-

### The Tightly coupled solution

### Home/Foreign TwinSys systems

### Calling Party services

When all the interconnected systems have full TwinSys capabilities, Calling Parties accessing any system can utilize all the CPSM services.

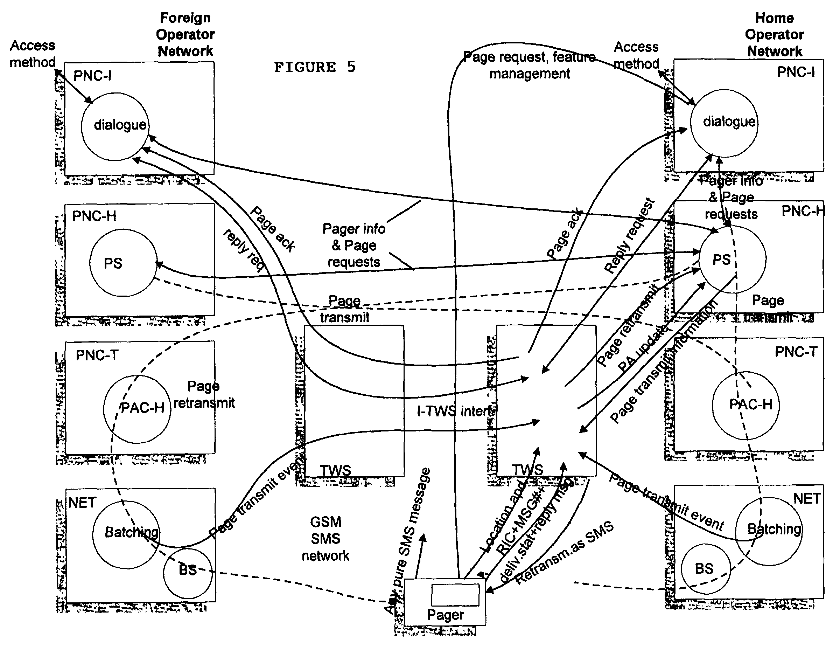

The Figure 5 shows the CPSM overlaid on top of the ERMES paging model, when both networks are TwinSys networks. Also Subscriber services are shown. Introduction of the CPSM on top of the One way Ermes network, requires new components. The needed additional components and their interworking in a normal one way Ermes paging system are shown in the Figure 5.

The additional components needed are the TwinServer (TWS), the TwinPager, and the GSM SMS network
Referring to the above described call scenario, the PNC-I receives the password from the PNC-H with the subscriber database information containing a flag indicating whether the subscriber is one or two way subscriber. The password has to be unique among all unacknowledged stored page requests and newly allocated passwords for new calls. The password is only created if the subscriber is a TwinSys subscriber. The page request is sent to the PNC-H of the AdC in question with the password information, and acknowledgment instructions using a transparent paging message. The page transmit from the PNC with the AdC, the password and acknowledgment instructions are copied to the TWS. The RIC and message number are used to match the Page transmit information, and the eventual page acknowledgment information from the TwinPager.
The batching in the PAC sends to the TWS the Page transmit event when the page is actually send to the base station. It is used for setting the retransmission timer. When the TwinPager receives the page, it or the subscriber acknowledges/replies to the page by sending the delivery status, the RIC, the message number, the subscriber reply message to the TWS.
The TWS either acknowledges the page to the calling party using the reply addresses stored in the TWS or starts a retransmit procedure explained in the previous chapter if the reply from the pager does not arrive in time. If the call was made in a foreign system the home TWS passes the acknowledgment information to the TWS of the foreign system which carries out the acknowledgment to the calling party. The calling party has also the option to call in and request the reply information from the subscriber by specifying the password and the AdC. The PNC-I then retrieves the reply from the local TWS. If the request is done in a foreign system the foreign TWS requests the information from the home TWS based on the AdC.
The TwinPager updates it location information to the PNC-H via the TWS.
The retransmission is done using a page request message, which contains the message number to be used. The PNC routes the message to the right PA.

### Subscriber services

### Received pages acknowledgments

This issue is already covered in the chapters above.

### Page entry

The subscriber can initiate a page entry by using his TwinPager independently of the received pages.
This is one access method amongst many others. The page request is done using SMS and the reply address can be specified along with the page request. The natural reply address is the paging AdC. However the default reply address is the MSISDN because it can be used automatically.

### Management of paging features

The TwinPager can be used to manage the paging system subscriber features like temporal barring and deferred delivery.
This is one access method amongst many others. The feature management request is done using SMS and the acknowledgment address can be specified along with the feature management request. The natural acknowledgment address is a paging AdC. However the default reply address is the MSISDN.

### Acknowledgments via paging

A calling party, who is also a subscriber in a paging system, can instruct the system to deliver the reply message from the paged party to his/her pager.
This simply means that when the system asks for the address where the paged party reply will be routed, the calling party enters his/her pager address.

### SMS messaging

A TwinPager can be used to send and receive SMS messages as a normal GSM phone. Consequently all SMS based services are available.
This is totally SMS dependent service. It may require that the TwinPager is in continuous SMS mode. See corresponding chapter below.

### Paging information services

Services can be constructed where the request for a service is done using SMS and the reply via paging. (stock exchange info, weather reports, bank account transactions.
A special information server is needed which understands the combined functioning of the SMS media for requests and paging for responses. The TWS may optionally house such a server.

### Multi mode function

The TwinPager can be designed to function in several modes: 1) TwinSys mode 2) TwinSys mode + continuous SMS 3) Only SMS use. These modes can be selected depending on what services are used and/or what networks are available.
The TwinSys uses the SMS very sparingly and does not require continuous messaging availability. However some service mentioned above require more or less continuous SMS connection.

### Web

Internet browser: commands are sent using SMS and replies are received via paging network.

### SMS paging

SMS as backup for paging network. If the TWS detects that a page can not be delivered due to missing interoperator agreement, base stations being down, satellite breakages, no coverage on the area indicated by GSM location register, pager inform about acknowledgment of paging coverage using SMS or any other reason, the TWS can use SMS to send the message to the pager.
This service requires a special TWS - SMS gateway to convert RICs to MSISDN addresses.

### Operator services

### Remote pager programming

The operator can using the transparent messages to program over the air the TwinSys traffic specific parameters, service provisioning related parameters, and load new software or scripts to the pager. The programming messages can optionally be encrypted.

### Home/Foreign TwinSys systems with one way accesses

### Calling Party services

The CPSM service utilization depends on the PNC-I support for the service. All access methods may not support the CPSM and many of the foreign ERMES operator nodes may not support the CPSM. In these cases only B2D service is used.

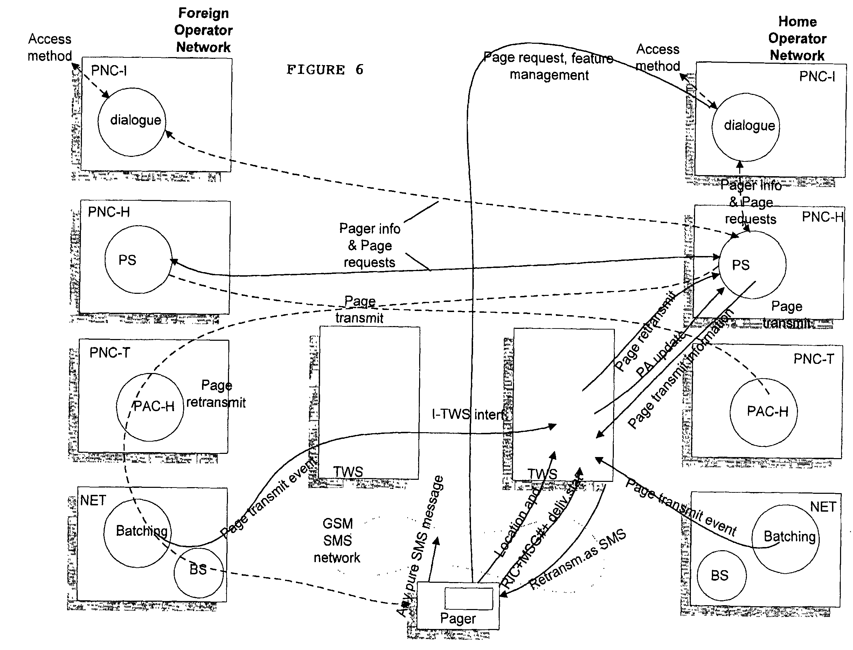

The Basic two way Delivery (B2D) service is a service, which is provided for the TwinSys subscribers, who are paged from an access, which does not support the TwinSys functionality.
The B2D service adds page delivery reliability to the one way ERMES service. It involves mainly the transmission parts of a paging system. There are two options for resending of a page as in the previous chapter. The TWS can also utilize the pager location information located in the TWS when doing the resending.
The needed additional components and their interworking in a normal one way Ermes paging system are shown in Figure 6.
The additional components needed are the TwinServer (TWS), the TwinPager, and the GSM SMS network.
The page is initiated and processed in the PNCs as normal one way ERMES paging messages. The page transmit information from the PNC with the AdC, the RIC and message number are copied to the TWS. The RIC and message number are used to match the Page transmit information, and the eventual page acknowledgment information from the TwinPager.
The batching in the PAC sends to the TWS the Page transmit event when the page is actually send to the base station. It is used for setting the retransmission timer. The retransmission timer is set to wait for the acknowledgment from the pager. If the timer goes off before the acknowledgment is received, the retransmission procedure is started. The timer values are deduced the same way as in the previous case.
When the pager receives the page it generates automatically an acknowledgment information containing the RIC, message number and delivery status, and sends it to the TWS. The TWS examines the acknowledgment, and if delivery status is ok, updates the message database with the ok information. If however the delivery status indicates for example that the message was corrupted, the message is resent in the same way as if the message was not acknowledged at all.
The TwinPager updates it location information to the PNC-H via the TWS.
The retransmission is done using a modified page request message, which contains the message number to be used. The PNC routes the message to the right PA.

### Subscriber services

### Received pages acknowledgments

Received pages acknowledgments is not possible for pages initiated via non-TwinSys access.

### Page entry

The subscriber can initiate a page entry by using his TwinPager independently of the received pages.
This is one access method amongst many others. The page request is done using SMS and the reply address can be specified along with the page request. The natural reply address is the paging AdC. However the default reply address is the MSISDN because it can be used automatically.

### Management of paging features

The TwinPager can be used to manage the paging system subscriber features like temporal barring and deferred delivery.
This is one access method amongst many others. The feature management request is done using SMS and the acknowledgment address can be specified along with the feature management request. The natural acknowledgment address is a paging AdC. However the default reply address is the MSISDN.

### Acknowledgments via paging

Received pages acknowledgments is not possible for pages initiated via non-TwinSys access.

### SMS messaging

A TwinPager can be used to send and receive SMS messages as a normal GSM phone. Consequently all SMS based services are available.
This is totally SMS dependent service. It may require that the TwinPager is in continuous SMS mode. See corresponding chapter below.

### Paging information services

Services can be constructed where the request for a service is done using SMS and the reply via paging. (stock exchange info, weather reports, bank account transactions.
A special information server is needed which understands the combined functioning of the SMS media for requests and paging for responses. The TWS may optionally house such a server.

### Multi mode function

TheTwinPager can be designed to function in several modes: 1) TwinSys mode 2) TwinSys mode + continuous SMS 3) Only SMS use. These modes can be selected depending on what services are used and/or what networks are available.

The TwinSys uses the SMS very sparingly and does not require continuous messaging availability. However some service mentioned above require more or less continuous SMS connection.

### Web

Internet browser: commands are sent using SMS and replies are received via paging network.

### SMS paging

SMS as backup for paging network. If the TWS detects that a page can not be delivered due to missing interoperator agreement, base stations being down, satellite breakages, no coverage on the area indicated by GSM location register, pager inform about acknowledgment of paging coverage using SMS or any other reason, the TWS can use SMS to send the message to the pager.
This service requires a special TWS - SMS gateway to convert RICs to MSISDN addresses.

### Operator services

### Remote pager programming

The operator can using the transparent messages to program over the air the TwinSys traffic specific parameters, service provisioning related parameters, and load new software or scripts to the pager. The programming messages can optionally be encrypted.

### Home TwinSys system and foreign standard one way system

### Calling Party services

When the home system has full TwinSys capabilities, and the foreign system is a normal Ermes system, Calling Parties accessing the home system can utilize all the CPSM services. Calling Parties accessing the foreign one way system sees only an one way system but internally the home system executes the B2D service also for these calls.

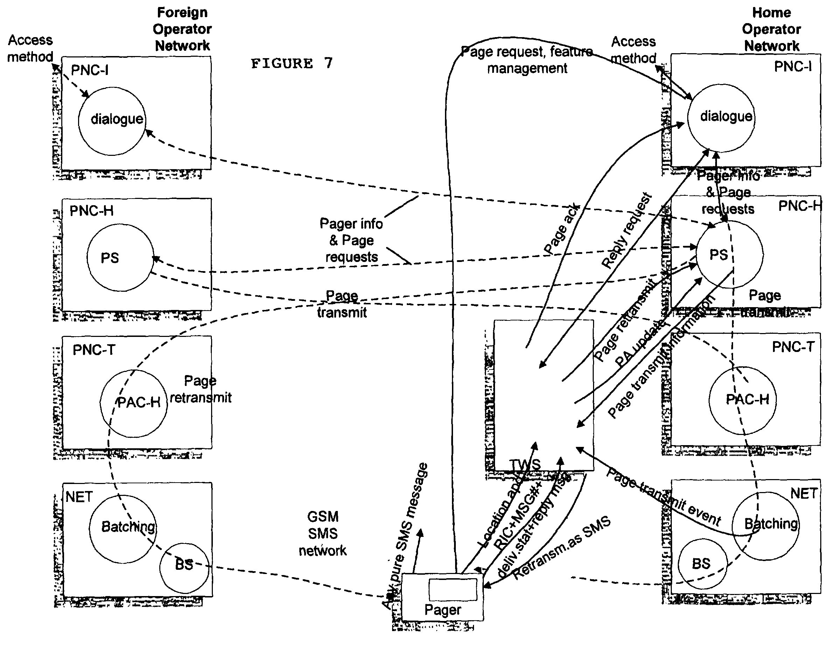

The Figure 7 shows the CPSM overlaid on top of the ERMES paging model, when only the home system is a TwinNet system. Also Subscriber services are shown. Introduction of the CPSM on top of the One way Ermes system, requires new components. The needed additional components and their interworking in a normal one way Ermes paging system are shown in the Figure 7.
The additional components needed for the home system are the TwinServer (TWS), the TwinPager, and GSM SMS network
Referring to the above chapter call scenario, the page requests and transmits initiated in the home TwinSys PNC-I are handled as explained in the corresponding chapter above. The page requests and transmits initiated in the foreign standard Ernes system are handled as explained in the corresponding chapter above.
The batching in the PAC sends to the TWS the page transmit event when the page is actually send to the base station. It is used for setting the retransmission timer. The retrasnmission timer is set to wait for the acknowledgment from the pager. If the timer goes off before the acknowledgment is received, the page is resent. The timer values are deduced the same way as in the previous case.
When the TwinPager receives the page, it or the subscriber acknowledges/replies to the page by sending the delivery status, the RIC, the message number, the password if available and the optional subscriber reply message to the TWS.

The TWS either acknowledges the page to the calling party (who is using home TwinSys access) using the reply addresses stored in the TWS or starts the retransmission procedure if the reply from the pager does not arrive in time. The calling party in the home system access has also the option to call in and request the reply information from the subscriber by specifying the password and the AdC. The PNC-I then retrieves the reply from the TWS.

The TwinPager updates it location information to the PNC-H via the TWS.
The retransmission is done using a modified page request message, which contains the message number to be used. The PNC routes the message to the right PA.

### Subscriber services

### Received pages acknowledgments

Subscriber acknowledgments are not possible for pages initiated in a foreign standard Ermes system. However subscriber acknowledgments are possible for pages initiated in the home TwinSys system.

### Page entry

The subscriber can initiate a page entry by using his TwinPager independently of the received pages.
This is one access method amongst many others. The page request is done using SMS and the reply address can be specified along with the page request. The natural reply address is the paging AdC. However the default reply address is the MSISDN because it can be used automatically.

### Management of paging features

The TwinPager can be used to manage the paging system subscriber features like temporal batting and deferred delivery.
This is one access method amongst many others. The feature management request is done using SMS and the acknowledgment address can be specified along with the feature management request. The natural acknowledgment address is a paging AdC. However the default reply address is the MSISDN.

### Acknowledgments via paging

A calling party, who is also a subscriber in a paging system, can instruct the system to deliver the reply message from the paged party to his/her pager.
This simply means that when the system asks for the address where the paged party reply will be routed, the calling party enters his/her pager address.

### SMS messaging

A TwinPager can be used to send and receive SMS messages as a normal GSM phone. Consequently all SMS based services are available.
This is totally SMS dependent service. It may require that the TwinPager is in continuous SMS mode. See corresponding chapter below.

### Paging information services

Services can be constructed where the request for a service is done using SMS and the reply via paging. (stock exchange info, weather reports, bank account transactions.
A special information server is needed which understands the combined functioning of the SMS media for requests and paging for responses. The TWS may optionally house such a server.

### Multi mode function

The TwinPager can be designed to function in several modes: 1) TwinSys mode 2) TwinSys mode + continuous SMS 3) Only SMS use. These modes can be selected depending on what services are used and/or what networks are available.
The TwinSys uses the SMS very sparingly and does not require continuous messaging availability. However some service mentioned above require more or less continuous SMS connection.

### Web

Internet browser: commands are sent using SMS and replies are received via paging network.

### SMS paging

SMS as backup for paging network. If the TWS detects that a page can not be delivered due to missing interoperator agreement, base stations being down, satellite breakages, no coverage on the area indicated by GSM location register, pager inform about acknowledgment of paging coverage using SMS or any other reason, the TWS can use SMS to send the message to the pager.
This service requires a special TWS - SMS gateway to convert RICs to MSISDN addresses.

### Operator services

### Remote pager programming

The operator can using the transparent messages to program over the air the TwinSys traffic specific parameters, service provisioning related parameters, and load new software or scripts to the pager. The programming messages can optionally be encrypted.

### Component funtionalities

The following chapters list functionality which has to be added to components in the ETSI ETS 300 133-1..7 to fulfill the TwinSys requirements.

### PNC-I

The user dialogues and supporting software needs the following additions:
- Request for a password to be prompted for the calling party, and subscriber database information from the PNC-H.
- Request for paged party (subscriber) reply delivery address from the calling party, and inclusion in appropriate messages.
- Handling of Subscriber reply acknowledgment routing.
- Handling of Subscriber reply acknowledgement request call.
- Preparation of the Page request transparent message containing the password and reply address(es).

### PNC-H

Unique password, and subscriber one/two way flag creation for the PNC-I. TwinPager location PA handling.
Generation of page transmit information to the TWS at the point where the page request message is converted to a page transmit message.
Encryption of the paging message.
Retransmission routing.

### PNC-T

No changes.

### NET

Page transmit event generation.

### TwinPager

The TwinPager has to function as a normal ERMES pager and in addition have the following functionalities:
- Logic for parsing the TwinSys transparent page.
- Decryption and encryption.
- Handling of service provisioning messages.
- SMS connectivity for sending and receiving SMS messages..
- Fragmentation support to be able to receive longer paging messages than the maximum SMS message length by splitting and concatenating the paging message.
- Generation of automatic and user entered reply messages for received pages.
- Page entry and feature management functionality.
- Generation of user entered free format SMS messages.
- Reporting of PA information autonomously or on request from the TWS.

### TwinServer

The TwinServer has the following databases

### Page storage

- AdC: Address code
- SMSG: Sent message contents
- PASSWORD: Unique identification of the generated page
- MNRO: Message number
- ACK: Acknowledgment received for the page from the pager (Yes/No)
- RMSG: Reply message contents
- RADD: Address to which reply will be sent
- REPC: Repeated pages count
- IREP: Interval for repetition

The following functionality is provided by the TwinServer:
- Stores the page transmit, the AdC, the password and the Reply Address(es) to the Page database.
- Receives the Page transmit event message from the PAC.
- Starts a retransmission procedure if acknowledgment from a pager has not arrived within specified time. Sending of a SMS message containing the paging message may be part of the retransmission procedure. Other functionality which may be part of the retransmission procedure are retransmitting the original message, and sending of a special tone only message to a TwinPager requesting the pager to update its location.
- Connects to GSM SMS service to receive reply messages and location updates from two way pagers and to route the replies to the Calling Parties.
- Reply to calling parties asking for replies to their paging calls they have earlier made.
- Maintaining of the pager location and updating it to the PNC-H.
- Encryption and decryption.
- Checks based on the TwinPage flag that the TwinPage has interpreted the normal one way transparent message correctly. If not resend the page as a TwinPage.
- Communicate with foreign TWSs regarding access related messaging, getting the PA delay information, and retransmits.

### Combined Loosely and Tightly coupled solutions

The solutions presented above do not necessary have to be as described but ideas in the two schemes can be also combined. For example the Page transmit event message can be used in the Loosely coupled solution if exact timing for the real page transmit is preferred to be used. It involves changes only in the NET.

## Claims

1. Paging network system containing at least two independent paging networks with paging terminals, each of the paging networks containing means for storing paging terminal location information and means for treating paging information,
characterised in that at least one linking arrangement is provided between the at least two paging networks which controls data flow between the paging networks.

2. Paging network system according to claim 1,
characterised in that the linking arrangement is connected to the means for storing paging terminal location information of at least one of the paging networks.

3. Paging network system according to one of the preceding claims,
characterised in that the linking arrangement is connected to the means for treating paging information of at least one of the paging networks.

4. Paging network system according to one of the preceding claims,
characterised in that at least one of the paging networks contains adapting means to enable interworking with the linking arrangement.

5. Paging network system according to one of the claims 1 to 3,
characterised in that the paging network structure remains unchanged when connected to the linking arrangement.

6. Linking arrangement for controlling data flow between independent paging networks with paging terminals,
characterised in that it contains means for treating location information assigned to paging terminals of at least one of the paging networks.

7. Linking arrangement according to claim 6,
characterised in that it contains means for treating paging information assigned to paging terminals of at least one of the paging networks.

8. Method for controlling data flow between independent paging networks with user terminals, whereby location information of paging terminals of the paging networks is stored in the paging networks,
characterised in that the data flow between the data networks is controlled by a linking arrangement independent form the paging networks.

9. Method according to claim 8,
characterised in that the linking arrangement accesses location information of at least one of the paging networks.

10. Method according to one of the claims 8 or 9,
characterised in that the linking arrangement treats paging information assigned to paging terminals of at least one of the paging networks.

11. Method according to one of the claims 8 to 10,
characterised in that the linking arrangement supports roaming of paging terminals of at least one of the paging network into the area of at least one further of the paging networks.

12. Method according to one of the claims 8 to 11,
characterised in that paging information originating from one of the paging networks is transferred at least partly in transparent mode via at least one of the further paging networks.

13. Access and linking arrangement, especially for a method or arrangement as described in one of the preceding claims, attached to at least to one one way paging network, which facilitates the Calling Party and Subscriber interactive or non interactive messaging in stand alone or interconnected one way paging networks having one way or two way access facilities.

14. Arrangement according to claim 13,
characterised in that the one way paging networks can be either modified or used as such without any modifications.

15. Arrangement according to one of the claims 13 to 14,
characterised in that messages to be acknowledged sent by the access and linking arrangement to the one way paging networks are coded in transparent messages, which are passed through the one way paging systems unmodified.

16. Arrangement according to one of the claims 13 to 15,
characterised in that the linking arrangement facilitates acknowledgments and retransmits in stand alone or interconnected one way paging networks having one way or two way access facilities.

17. Arrangement according to one of the claims 13 to 16,
characterised in that pager location information can be used to transmit the page only via the interconnected one way paging networks' Paging Area on which the pager currently is located.

18. Arrangement according to one of the claims 13 to 17,
characterised in that paging subscribers subscribing to a paging network linked with the linking arrangement can roam on interconnected one way paging networks which may or may not be linked with the linking arrangement.

19. Arrangement according to one of the claims 13 to 18,
characterised in that the one way paging networks are preferably ERMES networks

20. Arrangement according to one of the claims 13 to 19,
characterised in that the interconnection between the one way paging networks is preferably ERMES l4.

21. Arrangement according to one of the claims 13 to 20,
characterised in that the linking arrangement is linked with the Pagers (Paging terminal) using a data communication path.

22. Arrangement according to claim 21,
characterised in that the data communication path is preferably GSM SMS communication.

23. Arrangement according to one of the claims 13 to 22,
characterised in that the access arrangement, which is linked with the linking arrangement, and one way standalone or interconnected paging networks, facilitates subscriber replies to paging messages to be routed to the Calling Party on line or off line.
